# EUROPEAN PATENT APPLICATION

(11) **EP 2 610 220 A1**
(43) Date of publication of application: **03.07.2013**
(21) Application number: 11819985.0
(22) Date of filing: 25.08.2011
(51) Int. Cl.: C01G 30/02, C09C 1/04, C09C 3/08, C09C 3/10, C09D 7/12, C09D 201/00

(54) **DISPERSION IN HYDROPHOBIC ORGANIC SOLVENT OF SURFACE-MODIFIED COLLOIDAL PARTICLES OF ANHYDROUS ZINC ANTIMONATE, COATING COMPOSITION CONTAINING SAME, AND COATED MEMBER**

(30) Priority: 27.08.2010 JP 2010191184
(71) Applicant: Nissan Chemical Industries, Ltd., Chiyoda-ku Tokyo 101-0054 (JP)
(72) Inventor: FUJIMOTO, Osamu, Sodegaura-shi Chiba 299-0266 (JP); SHINJI, Tomonari, Sodegaura-shi Chiba 299-0266 (JP); KOYAMA, Yoshinari, Sodegaura-shi Chiba 299-0266 (JP)
(74) Representative: HOFFMANN EITLE
(86) International application number: PCT/JP2011/069168
(87) International publication number: WO 2012/026522

(57) **Abstract**

There is provided a hydrophobic-organic-solvent dispersion containing colloidal particles of anhydrous zinc antimonate having high transparency which has not been attained hitherto, a coating composition containing the hydrophobic-organic-solvent dispersion and a member coated with the coating composition. A hydrophobic-organic-solvent dispersion comprising colloidal particles of anhydrous zinc antimonate having a primary particle diameter of 5 to 500 nm, which are surface-modified with an alkylamine and a surfactant having an acid group is used. The surfactant has a carboxylic acid group, a sulfonic acid group, or a phosphoric acid group.

## Description

### TECHNICAL FIELD

The present invention relates to a hydrophobic-organic-solvent dispersion of surface-modified colloidal particles of anhydrous zinc antimonate, a coating composition containing the hydrophobic-organic-solvent dispersion, and a coated member containing the coating composition.
The hydrophobic-organic-solvent dispersion of colloidal particles of anhydrous zinc antimonate of the present invention is suitably used in various applications such as a transparent antistatic material, a transparent ultraviolet absorber, a transparent heat ray absorbing material, a hard coating material with a high refractive index, and an antireflective agent for resin, plastic, glass, paper, magnetic tape, and other material.

### BACKGROUND ART

An aqueous sol or an organic solvent sol of colloidal particles of anhydrous zinc antimonate has been disclosed. These sols are an aqueous sol or an organic solvent sol of colloidal particles of anhydrous zinc antimonite, which are stabilized with an alkylamine such as ethylamine, propylamine, isopropylamine, and diisobutylamine, an alkanolamine such as triethanolamine and monoethanolamine, or a diamine such as ethylenediamine, and an oxycarboxylic acid such as lactic acid, tartaric acid, malic acid, and citric acid.

It has been disclosed that the dispersion medium of the organic solvent sol is alcohols such as methanol, ethanol, propanol, and butanol, glycols such as ethylene glycol and diethylene glycol, cellosolves such as ethylcellosolve and propylcellosolve, or amides such as dimethylformamide and dimethylacetamide (see Patent Document 1).

In another sol disclosed, surface-modified colloidal particles of anhydrous zinc antimonate, obtained by coating the surfaces of colloidal particles of anhydrous zinc antimonate, which serve as cores, with a silicon-containing substance, are dispersed in a liquid. The sol contains an amine and/or an oxycarboxylic acid (see Patent Document 2).

There has been disclosed another sol in which surface-modified colloidal particles of anhydrous zinc antimonate obtained by coating the surfaces of colloidal particles of anhydrous zinc antimonate, which serve as cores, with an aluminum-containing substance, a polymer-type surfactant, or both of them are dispersed in a liquid (see Patent Document 3).

When these sols are sols in which colloidal particles of anhydrous zinc antimonate are dispersed in a hydrophobic organic solvent such as methyl ethyl ketone, the surfaces of colloidal particles of anhydrous zinc antimonate are not satisfactorily hydrophobized and these sols cannot maintain dispersibility. As a result, the colloidal particles in these sols aggregate and solid-liquid separation occurs. When a coating liquid is prepared by mixing these sols with a binder component, the miscibility of colloidal particles of anhydrous zinc antimonate with the binder component is poor, so that aggregates are generated in the coating liquid and/or solid-liquid separation occurs.

For preventing the buildup of static electricity in a transparent plastic, a highly transparent antistatic coating film that does not impair transparency of the substrate is required. With a coating film obtained from the coating liquid using the above sols of colloidal particles of anhydrous zinc antimonate, however, high transparency cannot be obtained.

### Prior-art Documents

### Patent Documents

Patent Document 1: Japanese Patent Application Publication No. 6-219743 (JP 6-219743 A)
Patent Document 2: Japanese Patent Application Publication No. 11-314918 (JP 11-314918 A)
Patent Document 3: Japanese Patent Application Publication No. 2005-330177 (JP 2005-330177 A)

### SUMMARY OF THE INVENTION

### Problem to be Solved by the Invention

It is an object of the present invention to provide a hydrophobic-organic-solvent dispersion containing colloidal particles of anhydrous zinc antimonate, the dispersion having high transparency that has not been attained hitherto, and it is another object of the present invention to provide a coating composition containing the hydrophobic-organic-solvent dispersion and a member coated with the coating composition.

### Means for Solving the Problem

That is, the present invention provides, according to a first aspect, a hydrophobic-organic-solvent dispersion containing colloidal particles of anhydrous zinc antimonate having a primary particle diameter of 5 to 500 nm, which are surface-modified with an alkylamine and a surfactant having an acid group,
according to a second aspect, the hydrophobic-organic-solvent dispersion according to the first aspect, in which the alkylamine is a C₄₋₁₈ alkylamine,
according to a third aspect, the hydrophobic-organic-solvent dispersion according to the first aspect, in which the acid group in the surfactant having the acid group is a carboxylic acid group, a sulfonic acid group, or a phosphoric acid group,
according to a fourth aspect, the hydrophobic-organic-solvent dispersion according to any one of the first aspect to the third aspect, in which the hydrophobic organic solvent is at least one selected from the group consisting of methylcellosolve, ethylcellosolve, methyl ethyl ketone, methyl isobutyl ketone, isobutyl acetate, isopropyl acetate, isopentyl acetate, ethyl acetate, butyl acetate, propyl acetate, pentyl acetate, propylene glycol monomethyl ether, propylene glycol monomethyl ether acetate, xylene, toluene, and benzene,
according to a fifth aspect, a coating composition containing the hydrophobic-organic-solvent dispersion described in any one of the first aspect to the fourth aspect and a binder component,
according to a sixth aspect, the coating composition according to the fifth aspect, in which the binder component is at least one selected from the group consisting of an acrylic resin, a polyester resin, a urethane resin, an epoxy resin, a polyvinyl alcohol resin, a melamine resin, gelatin and gelatin derivatives, cellulose and cellulose derivatives, a polyimide resin, a phenolic resin, an organic silicon compound, a urea resin, a diallyl phthalate resin, and a butyral resin,
according to a seventh aspect, a member including a coating film formed from the coating composition described in the fifth aspect or the sixth aspect on a surface of a substrate,
according to an eighth aspect, the member according to the seventh aspect, in which the substrate is made of plastic, rubber, glass, metal, ceramic, or paper,
according to a ninth aspect, the member according to the seventh aspect or the eighth aspect, in which the coating film has a surface resistance value of 10¹² Ω/□ or less,
according to a tenth aspect, a member including an antireflective film having an antireflective film on the coating film of the member described in any one of the seventh aspect to the ninth aspect.

### Effect of the Invention

The hydrophobic-organic-solvent dispersion of the present invention containing colloidal particles of anhydrous zinc antimonate having a primary particle diameter of 5 to 500 nm, which are surface-modified with an alkylamine and a surfactant having an acid group is excellent in dispersibility and preservation stability.

The coating composition obtained by mixing the hydrophobic-organic-solvent dispersion of the present invention and a binder can form a conductive coating film having high transparency when it is applied onto a substrate. Particularly, when the substrate is a transparent substrate, by using the coating composition of the present invention, a member having a conductive or antistatic coating film can be produced without impairing the transparency of the substrate. The coating film obtained from the coating composition of the present invention has a surface resistance value of 10¹²Ω/□ or less, that is, the coating film is excellent in conductivity and then, has excellent antistatic performance.

### MODES FOR CARRYING OUT THE INVENTION

### [Hydrophobic-organic-solvent dispersion]

The hydrophobic-organic-solvent dispersion as the scope of the present invention is a hydrophobic-organic-solvent dispersion containing colloidal particles of anhydrous zinc antimonate having a primary particle diameter of 5 to 500 nm, which are surface-modified with an alkylamine and a surfactant having an acid group.
The hydrophobic-organic-solvent dispersion can be obtained, for example, by a method including: adding an alkylamine to an aqueous sol of colloidal particles of anhydrous zinc antimonate; converting the aqueous sol into a methanol dispersion or an ethanol dispersion by solvent displacement; adding a surfactant having an acid group to the resultant dispersion; and displacing the solvent of the dispersion with a hydrophobic organic solvent.

### <Colloidal particles of anhydrous zinc antimonate>

The colloidal particles of anhydrous zinc antimonate used in the present invention can be obtained by a publicly known method as shown below.
For example, for the colloidal particles of anhydrous zinc antimonate used in the present invention, anhydrous zinc antimonate obtained by a method described in Japanese Patent Application Publication No. 6-219743 (JP 6-219743 A) can be suitably used. In this Publication, anhydrous zinc antimonate having a ZnO/Sb₂O₅ molar ratio of 0.8 to 1.2 and a primary particle diameter measured by observation under a transmission electron microscope of 5 to 500 nm, preferably 5 to 50 nm, and a production method thereof are described. Specifically, the anhydrous zinc antimonate is produced by mixing a zinc compound with colloidal antimony oxide so that the ZnO/Sb₂O₅ molar ratio is 0.8 to 1.2 followed by the calcining of the resultant mixture at 500 to 1,100°C. When antimony oxide sol, which is described later, is used as colloidal antimony oxide, anhydrous zinc antimonate can be produced by mixing antimony oxide sol and a zinc compound, drying the resultant mixture, and calcining the mixture at 500 to 1,100°C.

The zinc compound is at least one of zinc compound selected from the group consisting of zinc hydroxide, zinc oxide, an inorganic acid salt of zinc, and an organic acid salt of zinc. Examples of the inorganic acid salt of zinc include zinc carbonate, basic zinc carbonate, zinc nitrate, zinc chloride, and zinc sulfate. Examples of the organic acid salt of zinc include zinc formate, zinc acetate, and zinc oxalate. For these zinc compounds, compounds commercially available as an industrial chemical can be used. When zinc hydroxide or zinc oxide is used, those having a primary particle diameter of 500 nm or less can be used. Particularly, a salt containing an acid volatilized by calcining, that is, a carbonate (zinc carbonate, basic zinc carbonate) or an organic acid salt is preferred and these salts may be used individually or in combination of two or more thereof.

The colloidal antimony oxide used for the production of anhydrous zinc antimonate is antimony oxide having a primary particle diameter of 300 nm or less and examples thereof include: an antimony oxide sol such as an antimony pentaoxide sol, a hexaantimony tridecaoxide sol, and an antimony tetraoxide hydrate sol; and colloidal antimony trioxide. Here, the primary particle diameter refers to a particle diameter measured by observation under a transmission electron microscope.

The antimony pentaoxide sol can be produced by a publicly known method such as a method for oxidizing antimony trioxide (Japanese Examined Patent Application Publication No. 57-11848 (JP 57-11848 B)), a method for dealkalizing an alkali antimonate with an ion exchange resin (U.S. Patent No. 4110247 specification), and a method for subjecting sodium antimonate to an acid treatment (Japanese Patent Application Publication No. 60-41536 (JP 60-41536 A), Japanese Patent Application Publication No. 62-182116 (JP 62-182116 A)). The hexaantimony tridecaoxide sol can be produced by a method for oxidizing antimony trioxide (Japanese Patent Application Publication No. 62-125849 (JP 62-125849 A)). The antimony tetraoxide hydrate sol can also be produced by a method for oxidizing antimony trioxide (Japanese Patent Application Publication No. 52-21298 (JP 52-21298 A)).
Colloidal antimony trioxide can be produced by a gas phase method (Japanese Examined Patent Application Publication No. 61-3292 (JP 61-3292 B)).

As the antimony oxide sol, an acidic sol in which antimony oxide has a primary particle diameter of 2 to 200 nm, preferably 2 to 40 nm and a base such as amine and sodium is not contained is particularly preferred.
In the production of anhydrous zinc antimonate, as the antimony oxide sol, a sol having an antimony oxide (Sb₂O₅ Sb₆O₁₃, or Sb₂O₄) concentration of 1 to 60% by mass can be used. A dried product of the antimony oxide sol produced by drying the above antimony oxide sol by a method such as spray drying, vacuum drying, and freeze drying can also be used.

As the colloidal antimony oxide, a chemical commercially available as an industrial chemical in a form of an antimony pentaoxide sol, an antimony pentaoxide powder, or an ultrafine particle antimony trioxide powder can be used.

The mixing of the zinc compound and the antimony oxide sol can be performed using a stirrer such as a Satake-type stirrer, a Pfaudler impeller, and a disper at a mixing temperature of 0°C to 100°C for a mixing time of 0.1 to 30 hours.
The mixing of the zinc compound and the dried product of the antimony oxide sol or colloidal antimony trioxide can be performed by a mixer such as a mortar, a V-shaped mixer, a Henschel mixer, and a ball mill.
Here, the zinc compound and the antimony oxide sol, a dried product thereof, or colloidal antimony trioxide are preferably mixed so that the molar ratio of ZnO/Sb₂O₅ is 0.8 to 1.2.

The drying of the mixture (slurry) of the zinc compound and the antimony oxide sol can be performed by a spray dryer, a drum dryer, a cube-type hot air dryer, a vacuum dryer, a freeze dryer, or the like at 500°C or less. Before drying, the slurry may be solid-liquid separated by filtration under reduced pressure, centrifugal filtration, filter press, or the like, or according to circumstances, a soluble impurity derived from the raw material such as SO₄ may be removed by pouring-water washing, and then, the resultant wet cake can also be dried by a cube-type hot air dryer or the like at room temperature to 500°C. The drying is preferably performed at 300°C or less.

The calcining of the dried product of the mixture of the zinc compound and the antimony oxide sol, the mixture of the zinc compound and the dried product of the antimony oxide sol, or the mixture of the zinc compound and colloidal antimony trioxide is performed at 500°C to 1,100°C, preferably 550°C to 900°C, for 0.5 hours to 50 hours, preferably 2 hours to 20 hours. With this calcining, anhydrous zinc antimonate can be obtained by a solid-phase reaction. Anhydrous zinc antimonate becomes white to blue green, depending on the calcining conditions.

Anhydrous zinc antimonate obtained by the above method has, when observed under a transmission electron microscope, a primary particle diameter of 5 to 500 nm, so that anhydrous zinc antimonate is a fine particle at a colloid level. Particularly, anhydrous zinc antimonate obtained by baking at a calcining temperature of 500°C to 680°C exhibits a resistance value of 0.1 kΩ to 1 MΩ and has conductivity caused by electronic conduction.

### <Aqueous sol of colloidal particles of anhydrous zinc antimonate>

By converting anhydrous zinc antimonate obtained by the above method into an aqueous sol by wet grinding and by subjecting the aqueous sol to a deionization treatment, an aqueous sol of colloidal particles of anhydrous zinc antimonate having high transparency can be obtained.

The wet grinding can be performed using a grinding medium such as zirconia beads and glass beads and using a wet grinding apparatus. By subjecting anhydrous zinc antimonate to wet grinding, an aqueous sol of colloidal particles of anhydrous zinc antimonate having a primary particle diameter measured by observation under a transmission electron microscope of 5 to 500 nm can be produced.

Then, by subjecting to a deionization treatment the above aqueous sol of colloidal particles of anhydrous zinc antimonate obtained by wet grinding, the aqueous sol of colloidal particles of anhydrous zinc antimonate can be converted into an aqueous sol of colloidal particles of anhydrous zinc antimonate having high transparency. The deionization treatment can be performed by anion exchange and/or cation exchange, and anion exchange and cation exchange can be performed using an anion exchange resin and a cation exchange resin, respectively.

### <Alkylamine addition, methanol or ethanol dispersion>

To the aqueous sol of colloidal particles of anhydrous zinc antimonate that has been subjected to a deionization treatment, a C₄₋₁₈ alkylamine as a dispersant is added. Examples of the C₄₋₁₈ alkylamine include n-butylamine, di-n-butylamine, tri-n-butylamine, di-n-amylamine, and tri-n-amylamine and among them, preferred are low molecular alkylamines such as n-butylamine, di-n-butylamine, and tri-n-butylamine.

The additive amount of the alkylamine is preferably 0.1 to 10% by mass, more preferably 0.2 to 2.0% by mass, based on the mass of the anhydrous zinc antimonate solid content.

By displacing with methanol or ethanol the solvent of the aqueous sol of colloidal particles of anhydrous zinc antimonate to which an alkylamine is added, the aqueous sol can be converted into a methanol dispersion or an ethanol dispersion. The solvent displacement can be performed under normal pressure or reduced pressure.

### <Surfactant addition>

By adding a surfactant having an acid group to the methanol dispersion or the ethanol dispersion of colloidal particles of anhydrous zinc antimonate obtained by the above solvent displacement, the surface modification of the colloidal particles of anhydrous zinc antimonate can be performed.

As the surfactant having an acid group, a surfactant having at least one of functional group selected from the group consisting of a carboxylic acid group, a sulfonic acid group, and a phosphoric acid group, is used.

Examples of the surfactant having a carboxylic acid group include potassium laurate, potassium myristate, polyoxyethylene lauryl ether acetic acid, sodium polyoxyethylene lauryl ether acetate, polyoxyethylene oxypropylene lauryl ether acetic acid, sodium polyoxypropylene lauryl ether acetate, polyoxyethylene tridecyl ether acetic acid, coconut oil fatty acid sarcosine triethanolamine, and ammonium lauroylsarcosinate.

Examples of the surfactant having a sulfonic acid group include ammonium laurylsulfate, ammonium polyoxyethylene lauryl ether sulfate, ammonium polyoxyethylene oxypropylene lauryl ether sulfate, ammonium polyoxypropylene lauryl ether sulfate, ammonium polyoxyethylene nonyl phenyl ether sulfate, ammonium polyoxyethylene tristyryl phenyl ether sulfate, ammonium polyoxyethylene oxypropylene tristyryl phenyl ether sulfate, ammonium polyoxypropylene tristyryl phenyl ether sulfate, ammonium polyoxyethylene coconut oil fatty acid monoethanolamide sulfate, ammonium polyoxyethylene oxypropylene coconut oil fatty acid monoethanolamide sulfate, ammonium polyoxypropylene coconut oil fatty acid monoethanolamide sulfate, diammonium lauryl dioctyl sulfosuccinic acid polyoxyethylene sulfosuccinate, diammonium lauryl dioctyl sulfosuccinic acid polyoxyethylene oxypropylene sulfosuccinate, diammonium lauryl dioctyl sulfosuccinic acid polyoxypropylene sulfosuccinate, disodium polyoxyethylene lauryl sulfosuccinate, disodium polyoxyethylene tridecyl sulfosuccinate, disodium polyoxyethylene myristyl sulfosuccinate, diammonium lauryl polyoxyethylene oxypropylene sulfosuccinate, diammonium lauryl polyoxypropylene sulfosuccinate, ammonium coconut oil fatty acid methyltaurinate, ammonium monoisopropyl naphthalene sulfonate, ammonium diisopropyl naphthalene sulfonate, n-butyl naphthalene sulfone, ammonium dodecyl diphenyl ether disulfonate, and ammonium lignin sulfonate.

Examples of the surfactant having a phosphoric acid group include ammonium dipolyoxyethylene lauryl ether phosphate, ammonium dipolyoxyethylene oxypropylene lauryl ether phosphate, ammonium dipolyoxypropylene lauryl ether phosphate, dipolyoxyethylene oleyl ether phosphoric acid, dipolyoxyethylene oxypropylene lauryl ether phosphoric acid, dipolyoxypropylene oleyl ether phosphoric acid, ammonium lauryl phosphate, ammonium octyl ether phosphate, ammonium cetyl ether phosphate, polyoxyethylene lauryl ether phosphoric acid, polyoxyethylene oxypropylene lauryl ether phosphoric acid, polyoxypropylene lauryl ether phosphoric acid, triethanolamine polyoxyethylene tristyryl phenyl ether phosphate, triethanolamine polyoxyethylene oxypropylene tristyryl phenyl ether phosphate, and triethanolamine polyoxypropylene tristyryl phenyl ether phosphate. Among them, preferred are surfactants having a polyoxyethylene group or a phenyl group such as polyoxyethylene alkyl phenyl ether phosphoric acid and polyoxyethylene alkyl ether phosphoric acid.

As the surfactant used in the present invention, among the above surfactants, particularly, a surfactant having a phosphoric acid group is preferably used. Examples of the surfactant having a phosphoric acid group include commercially available surfactants such as Phosphanol (registered trade mark) PE-510, PE-610, LB-400, EC-6103, and RE-410 (manufactured by TOHO Chemical Industry Co., Ltd.), and Disperbyk (registered trade mark)-102, Disperbyk-110, Disperbyk-111, Disperbyk-116, Disperbyk-140, Disperbyk-161, Disperbyk-163, Disperbyk-164, and Disperbyk-180 (manufactured by BYK Japan KK), but are not limited to these.

The amount of the used surfactant having an acid group is preferably 1.0 to 50% by mass, more preferably 1.5 to 30% by mass, based on the mass of the colloidal particles of anhydrous zinc antimonate (solid content).

### <Hydrophobic-organic-solvent dispersion>

By displacing with a hydrophobic organic solvent the solvent of a methanol dispersion or an ethanol dispersion of colloidal particles of anhydrous zinc antimonate that are surface-modified with an alkylamine and a surfactant having an acid group, a hydrophobic-organic-solvent dispersion can be obtained.

Preferred examples of the hydrophobic organic solvent used in the present invention include: ethers such as methylcellosolve and ethylcellosolve; ketones such as methyl ethyl ketone and methyl isobutyl ketone; esters such as isobutyl acetate, isopropyl acetate, isopentyl acetate, ethyl acetate, butyl acetate, propyl acetate, and pentyl acetate; ether alcohols such as propylene glycol monomethyl ether; ether esters such as propylene glycol monomethyl ether acetate; and hydrocarbons such as xylene, toluene, and benzene.

As for the hydrophobic-organic-solvent dispersion containing colloidal particles of anhydrous zinc antimonate that are surface-modified with an alkylamine and a surfactant having an acid group, the diluted liquid that is prepared by mixing the hydrophobic-organic-solvent dispersion, methanol, and water in a mass ratio of hydrophobic-organic-solvent dispersion : methanol : water = 1 : 1 : 1 has a pH value (hereinafter, expressed as "pH (1+1+1)") of preferably 4.0 or more when measured by a pH meter 1 hour after the dilution of the hydrophobic-organic-solvent dispersion. When pH (1+1+1) is less than 4.0, the preservation stability of the hydrophobic-organic-solvent dispersion is poor, so that the hydrophobic-organic-solvent dispersion falls into an aggregated state after about 24 hours.

The hydrophobic-organic-solvent dispersion containing colloidal particles of anhydrous zinc antimonate having a primary particle diameter of 5 to 500 nm, which are surface-modified with an alkylamine and a surfactant having an acid group of the present invention, is obtained as a dispersion having an anhydrous zinc antimonate concentration of 1 to 60% by mass.

### [Coating composition]

It is also another scope of the present invention to provide a coating composition containing: the hydrophobic-organic-solvent dispersion containing colloidal particles of anhydrous zinc antimonate having a primary particle diameter of 5 to 500 nm, which are surface-modified with an alkylamine and a surfactant having an acid group; and a binder component. The coating composition of the present invention is suitable for obtaining a coating film having transparent-conductivity, transparent-antistatic properties, or high refractive index properties.

The binder used in the composition is not particularly limited to the description of the present specification. As the binder, at least one or two or more selected from the group consisting of an acrylic resin, a polyester resin, a urethane resin, an epoxy resin, a polyvinyl alcohol resin, a melamine resin, gelatin and gelatin derivatives, cellulose and cellulose derivatives, a polyimide resin, a phenolic resin, an organic silicon compound, a urea resin, a diallyl phthalate resin, and a butyral resin can be used.

Examples of the acrylic resin include those containing, as a component, the compound (monomer) derived from (meth)acrylic acid described below. These monomers may be used individually or in combination of two or more thereof. In the above composition, the binder can be used in any one state of a monomer, an oligomer, and a polymer:

Trifluoroethyl acrylate, trifluoromethyl acrylate, phenylglycidyl acrylate, hydroxyethyl (meth)acrylate, acryloylmorpholine, neopentyl glycol (meth)acrylate, 1,6-hexanediol di(meth)acrylate, trimethylolpropane (meth)acrylate, ditrimethylolpropane tetra(meth)acrylate, pentaerythritol tetra(meth)acrylate, pentaerythritol tri(meth)acrylate, pentaerythritol (meth)acrylate, ethylene glycol di(meth)acrylate, diethylene glycol di(meth)acrylate, triethylene glycol di(meth)acrylate, tetraethylene glycol di(meth)acrylate, nonaethylene glycol di(meth)acrylate, polyethylene glycol di(meth)acrylate, tripropylene glycol di(meth)acrylate, tetrapropylene glycol di(meth)acrylate, nonapropylene glycol di(meth)acrylate, polypropylene glycol di(meth)acrylate, hydroxy pivalic acid neopentyl glycol di(meth)acrylate, bisphenol A di(meth)acrylate, 2-ethyl, 2-butyl-propanediol di(meth)acrylate, 1,9-nonandiol di(meth)acrylate, 2,2-bis[4-(acryloxydiethoxy)phenyl]propane, 2,2-bis[4-(methacryloxydiethoxy)phenyl]propane, 3-phenoxy-2-propanoyl acrylate, 1,6-bis(3-acryloxy-2-hydroxypropyl)-hexyl ether, trimethylolpropane tri(meth)acrylate, glycerin tri(meth)acrylate, tris-(2-hydroxyethyl)-isocyanuric acid ester (meth)acrylate, pentaerythritol penta(meth)acrylate, dipentaerythritol hexa(meth)acrylate, 2-hydroxypropyl (meth)acrylate, isobutyl (meth)acrylate, tert-butyl (meth)acrylate, 2-ethylhexyl (meth)acrylate, stearyl acrylate, 2-ethylhexylcarbitol acrylate, ω-carboxypolycaprolactone monoacrylate, acryloyloxyethylic acid, acrylic acid dimer, lauryl (meth)acrylate, 2-methyoxyethyl acrylate, butoxyethyl acrylate, ethoxyethoxyethyl acrylate, methoxytriethylene glycol acrylate, methoxypolyethylene glycol acrylate, stearyl (meth)acrylate, cyclohexyl (meth)acrylate, tetrahydrofurfuryl (meth)acrylate, isobornyl (meth)acrylate, dicyclopentenyl acrylate, benzyl acrylate, phenyl glycidyl ether epoxy acrylate, phenoxyethyl (meth)acrylate, phenoxy(poly)ethylene glycol acrylate, nonylphenolethoxylated acrylate, acryloyloxyethylphthalic acid, tribromophenyl acrylate, tribromophenolethoxylated (meth)acrylate, methyl methacrylate, tribromophenyl methacrylate, methacryloyloxyethylic acid, methacryloyloxyethylmaleic acid, methacryloyloxyethylhexahydrophthalic acid, methacryloyloxyethylphthalic acid, polyethylene glycol (meth)acrylate, polypropylene glycol (meth)acrylate, β-carboxyethyl acrylate, N-methylolacrylamide, N-methoxymethylacrylamide, N-ethoxymethylacrylamide, N-n-butoxymethylacrylamide, tert-butylacrylamide sulfonic acid, N-methylacrylamide, N-dimethylacrylamide, N-dimethylaminoethyl (meth)acrylate, N-dimethylaminopropylacrylamide, glycidyl methacrylate, n-butyl methacrylate, ethyl methacrylate, allyl methacrylate, cetyl methacrylate, pentadecyl methacrylate, methoxypolyethylene glycol (meth)acrylate, diethylaminoethyl (meth)acrylate, methacryloyloxyethylsuccinic acid, hexanediol diacrylate, neopentyl glycol diacrylate, triethylene glycol diacrylate, polyethylene glycol diacrylate, polypropylene glycol diacrylate, pentaerythritol diacrylate monostearate, glycol diacrylate, 2-hydroxyethylmethacryloyl phosphate, bisphenol A ethylene glycol-adduct acrylate, bisphenol F ethylene glycol-adduct acrylate, tricyclodecanemethanol diacrylate, trishydroxyethyl isocyanurate diacrylate, 2-hydroxy-1-acryloxy-3-methacryloxypropane, trimethylolpropane triacrylate, trimethylolpropane ethylene glycol-adduct triacrylate, trimethylolpropane propylene glycol-adduct triacrylate, pentaerythritol triacrylate, trisacryloyloxyethyl phosphate, trishydroxyethyl isocyanurate triacrylate, modified ε-caplolactone triacrylate, trimethylolpropaneethoxy triacrylate, glycerin propylene glycol-adduct triacrylate, pentaerythritol tetraacrylate, pentaerythritol ethylene glycol-adduct tetraacrylate, ditrimethylolpropane tetraacrylate, dipentaerythritol hexa(penta)acrylate, dipentaerythritolmonohydroxy pentaacrylate, and epoxy acrylate.

Examples of the polyester resin include a linear polyester containing as components, a dicarboxylic acid component and a glycol component. Examples of the dicarboxylic acid component and the glycol component are shown below. These components may be used individually or in combination of two or more thereof.

- Dicarboxylic acid component: terephthalic acid, isophthalic acid, phthalic acid, 2,6-naphthalenedicarboxylic acid, 4,4-diphenyldicarboxylic acid, 1,4-cyclohexanedicarboxylic acid, adipic acid, sebacic acid, phenylindandicarboxylic acid, and dimer acid.

- Glycol component: ethylene glycol, 1,4-butanediol, neopentyl glycol, diethylene glycol, dipropylene glycol, 1,6-hexanediol, 1,4-cyclohexanedimethanol, xylylene glycol, dimethylolpropionic acid, glycerin, trimethylolpropane, poly(ethyleneoxy) glycol, poly(tetramethyleneoxy) glycol, bisphenol A alkylene oxide-adduct, and hydrogenated bisphenol A alkylene oxide-adduct.

Examples of the urethane resin include usually resins obtained by subjecting polyisocyanate and an active hydrogen-containing compound to a polyaddition reaction. Examples of the polyisocyanate and the active hydrogen-containing compound are shown below. These compounds may be used individually or in combination of two or more thereof.

- Polyisocyanate: ethylene diisocyanate, tetramethylene diisocyanate, hexamethylene diisocyanate (HDI), diphenylmethane diisocyanate (MDI), tolylene diisocyanate (TDI), dodecamethylene diisocyanate, 1,6,11-undecane triisocyanate, 2,2,4-trimethylhexamethylene diisocyanate, lysine diisocyanate [2,6-diisocyanatomethylcaproate], bis(2-isocyanatoethyl) fumarate, bis(2-isocyanatoethyl) carbonate, 2-isocyanatoethyl-2,6-diisocyanatohexanoate, isophorone diisocyanate (IPDI), dicyclohexylmethane-4,4'-diisocyanate (hydrogenated MDI), cyclohexylene diisocyanate, methylcyclohexylene diisocyanate, bis(2-isocyanatoethyl)-4-cyclohexene-1,2-dicarboxylate, 2,5- or 2,6-norbornane diisocyanate, m- or p-xylylene diisocyanate, α, α, α', α'-tetramethylxylylene diisocyanate, modified products of polyisocyanate such as modified MDI (urethane-modified MDI, carbodiimide-modified MDI, trihydrocarvyl phosphate-modified MDI), urethane-modified TDI, biuret-modified HDI, isocyanurate-modified HDI, isocyanurate-modified IPDI, and a mixture of two or more thereof.

Active hydrogen-containing compound: divalent alcohol (such as ethylene glycol, diethylene glycol, 1,3-propanediol, 1,4-butanediol, 1,5-pentanediol, 1,6-hexanediol), diol having a branched chain (such as propylene glycol, neopentyl glycol, 3-methyl-1,5-pentanediol, 2,2-diethyl-1,3-propanediol, 1,2-, 1,3-, or 2,3-butanediol), diol having a cyclic group (such as 1,4-bis(hydroxymethyl)cyclohexane, m- or p-xylene glycol), divalent phenol (such as bisphenol A), polyhydric alcohol (such as glycerin, trimethylolpropane, pentaerythritol, sorbitol), saccharides and derivatives thereof (such as saccharose and methylglucoside), aliphatic diamine (such as ethylenediamine and hexamethylenediamine), alicyclic diamine (such as 4,4'-diamino-3,3'-dimethyldicyclohexylmethane, diaminocyclohexane, and isophoronediamine), aromatic diamine (such as diethyltoluenediamine), aromatic-aliphatic diamine (such as xylylenediamine and α, α, α', α'-tetramethylxylylenediamine), heterocyclic diamine (such as piperidine), multi-functional amine (such as diethylenetriamine and triethylenetetramine), macromolecular polyol (such as polyester polyol and polyether polyol), aliphatic polycarboxylic acid (such as succinic acid, glutaric acid, maleic acid, fumaric acid, adipic acid, azelaic acid, sebacic acid, and hexahydrophthalic acid), aromatic polycarboxylic acid (such as phthalic acid, isophthalic acid, terephthalic acid, tetrabromophthalic acid, tetrachlorophthalic acid, trimellitic acid, and pyromellitic acid), maleic anhydride, phthalic anhydride, dimethyl terephthalate, lactone monomer (such as γ-butylolactone, ε-caprolactone, and γ-valerolactone), and a compound having two or more active hydrogen atoms and having a structure in which an alkylene oxide is added.

Examples of the epoxy resin include: various liquid epoxy resins such as bisphenol A-type, bisphenol F-type, hydrogenated bisphenol A-type, bisphenol AF-type, and phenolnovolac-type, and derivatives thereof; a liquid epoxy resin derived from a polyhydric alcohol and epichlorohydrin and derivatives thereof; and various glycidyl-type liquid epoxy resins such as glycidylamine-type, hydantoin-type, aminophenol-type, aniline-type, and toluidine-type, and derivatives thereof.

As the polyvinylalcohol-type resin, there can be used a resin obtained by saponifying a polyvinylester-type polymer obtained by radical-polymerizing a vinyl ester-type monomer such as vinyl acetate. Examples of the polyvinylester-type polymer are shown below. These polymers may be used individually or in combination of two or more thereof:

- Polyvinylester-type polymer: polymers of a vinylester-type monomer such as vinyl formate, vinyl acetate, vinyl propionate, vinyl valerate, vinyl laurate, vinyl stearate, vinyl benzoate, vinyl pivalate, and vinyl versatate.
The polyvinylester-type polymer may be a copolymer produced by copolymerizing the above vinylester-type monomer with a comonomer copolymerizable with the above vinylester-type monomer. Examples of the comonomer include: olefins such as ethylene, propylene, 1-butene, and isobutene; acrylic acid esters such as acrylic acid and salts thereof, methyl acrylate, ethyl acrylate, n-propyl acrylate, isopropyl acrylate, n-butyl acrylate, isobutyl acrylate, tert-butyl acrylate, 2-ethyl hexyl acrylate, dodecyl acrylate, and octadecyl acrylate; methacrylic acid esters such as methacrylic acid and salts thereof, methyl methacrylate, ethyl methacrylate, n-propyl methacrylate, isopropyl methacrylate, n-butyl methacrylate, isobutyl methacrylate, tert-butyl methacrylate, 2-ethylhexyl methacrylate, dodecyl methacrylate, and octadecyl methacrylate; acrylamide derivatives such as acrylamide, hydroxyalkyl acrylamide, N-methylacrylamide, N-ethylacrylamide, N,N-dimethylacrylamide, diacetone acrylamide, acrylamide propanesulfonic acid and salts thereof, acrylamide propyldimethylamine and salts or quaternary salts thereof, and N-methylol acrylamide and derivatives thereof; methacrylamide derivatives such as methacrylamide, N-methylmethacrylamide, N-ethylmethacrylamide, methacrylamide propanesulfonic acid and salts thereof, methacrylamide propyldimethylamine and salts or quaternary salts thereof, N-methylolmethacrylamide and derivatives thereof; vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, dodecyl vinyl ether, and stearyl vinyl ether; nitriles such as acrylonitrile and methacrylonitrile; halogenated vinyls such as vinyl chloride, vinylidene chloride, vinyl fluoride, and vinylidene fluoride; allyl compounds such as allyl acetate and allyl chloride; maleic acid, salts thereof, or esters thereof; vinyl silyl compounds such as vinyl trimethoxysilane; and isopropenyl acetate.

Examples of the melamine resin include a methylated melamine resin, a butylated melamine resin, and a methylated melamine/butylated melamine mixed-type melamine resin.

Examples of the gelatin and gelatin derivatives include a phthaloylated gelatin, a succinylated gelatin, a trimellitated gelatin, a pyromellitated gelatin, an esterified gelatin, an amidated gelatin, and a formylated gelatin.

Examples of the cellulose and cellulose derivatives include diacetylcellulose, triacetylcellulose, hydroxypropylcellulose, triacetylcellulose, diacetylcellulose, acetylcellulose, cellulose acetate propionate, cellulose acetate butylate, cellulose acetate phthalate, cellulose acetate trimellitate, and cellulose nitrate.

Examples of the organic silicon compound include silicon compounds containing a component C below and/or a component D below.
Component C: an organic silicon compound of General Formula (I) or a hydrolysis-condensation product thereof.

(R¹)ₐ(R³)_{b}Si(OR²)_{4-(a+b)} (I)

(where R¹ and R³ are individually an organic group selected from the group consisting of a C₁₋₂₀ alkyl group, an alkenyl group, an aryl group, an acyl group, a halogen group, a glycidoxy group, an epoxy group, an amino group, a phenyl group, a mercapto group, a methacryloxy group, and a cyano group; R² is an organic group selected from the group consisting of a C₁₋₈ alkyl group, an alkoxy group, an acyl group, and a phenyl group; and a and b are an integer of 0 or 1).
Component D: an organic silicon compound of General Formula (II) or a hydrolysis-condensation product thereof.

{(OX)₃₋ₐSi(R⁴)}₂Y (II)

(where R⁴ is a C₁₋₅ organic group; X is a C₁₋₄ alkyl group or a C₁₋₄ acyl group; Y is a C₂₋₂₀ organic group; and a is an integer of 0 or 1).

Specific examples of the organic silicon compound of General Formula (I) and the hydrolysis-condensation product thereof include methyl silicate, ethyl silicate, n-propyl silicate, isopropyl silicate, n-butyl silicate, tetraacetoxysilane, methyltrimethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenethyloxysilane, glycidoxymethyltrimethoxysilane, glycidoxymethyltrimethoxysilane, α-glycidoxyethyltrimethoxysilane, α-glycidoxyethyltriethoxysilane, β-glycidoxyethyltrimethoxysilane, β-glycidoxyethyltriethoxysilane, α,-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl) ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, y-glycidoxypropylethyldimethoxysilane, γ-glycidoxypropylethyldiethoxysilane, γ-glycidoxypropylvinylmethoxysilane, γ-glycidoxypropylvinylethoxysilane, γ-glycidoxypropylvinylphenylmethoxysilane, γ-glycidoxypropylvinylphenylethoxysilane, ethyltrimethoxysilane, ethyltriethoxysilane, vinyltrimethoxysilane, vinyltriacetoxysilane, vinyltriethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)γ-aminopropyltrimethoxysilane, N-(β-aminoethyl)γ-aminopropylmethyldimethoxysilane, γ-aminopropylmethyltrimethoxysilane, N-(β-aminoethyl)γ-aminopropyltriethoxysilane, N-(β-aminoethyl)γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptomethyldiethoxysilane, methylvinyldimethoxysilane, methylvinyldiethoxysilane, and a hydrolysis-condensation product thereof.

Specific examples of the organic silicon compound of General Formula (II) or the hydrolysis-condensation product thereof include methylenebis(methyldimethoxysilane), ethylenebis(ethyldimethoxysilane), propylenebis(ethyldiethoxysilane), butylenebis(ethyldiethoxysilane), and a hydrolysis-condensation product thereof.

As the organic silicon compound or the hydrolysis-condensation product thereof as the component C and the component D, the component C and the component D may be used individually or in combination of the component C and the component D. Two or more of the component C or two or more of the component D may also be used.

The hydrolysis-condensation reaction of the organic silicon compound as the component C and/or the component D is effected by adding, as a catalyst, an acid component such as a hydrochloric acid aqueous solution, a sulfuric acid aqueous solution, and an acetic acid aqueous solution into the organic silicon compound as the component C and/or the component D in an amount of around 0.1 to 10% by mass, based on the mass of the organic silicon compound, and by stirring the resultant mixture.

As the organic silicon compound, besides the silicon compounds mentioned above as examples for the component C and the component D, a silicone varnish and a modified silicone varnish such as a silicone alkyd varnish, a silicone epoxy varnish, a silicone acrylic varnish, or a silicone polyester varnish may be used. These organic silicon compounds may be used individually or in combination of two or more thereof.

Examples of the diallyl phthalate resin include diallyl phthalate, diallyl isophthalate, or diallyl terephthalate.

Examples of the butyral resin include polyvinylbutyral.

In the coating composition containing the hydrophobic-organic-solvent dispersion containing colloidal particles of anhydrous zinc antimonate having a primary particle diameter of 5 to 500 nm, which are surface-modified with an alkylamine and a surfactant having an acid group of the present invention; and a binder component, a mixing ratio of the colloidal particles of anhydrous zinc antimonate contained in the hydrophobic-organic-solvent dispersion : the binder component in a solid content ratio is 99 : 1 to 1 : 99. In order to obtain adhesion, hardness, economy, and stable antistatic ability of a coating film formed from the coating composition, the mixing ratio in a solid content ratio is preferably 95 : 5 to 50 : 50.

In the coating composition of the present invention, for the purpose of enhancing the dispersibility and the preservation stability of the coating composition, an acid or a base may be added.

Examples of the acid to be added include: an inorganic acid such as hydrochloric acid, nitric acid, and orthophosphoric acid; a dicarboxylic acid such as oxalic acid, malonic acid, and succinic acid; an aliphatic oxy acid such as lactic acid, tartaric acid, malic acid, citric acid, glycolic acid, hydroacrylic acid, α-hydroxybutyric acid, glyceric acid, and tartronic acid; and phosphonic acid such as phenylphosphonic acid and 1-hydroxyethylidene-1,1-diphosphonic acid.

Examples of the base to be added include: ammonia; an alkali metal hydroxide; and an organic base, for example, an alkyl amine such as ethylamine, diethylamine, n-propylamine, isopropylamine, diisopropylamine, dipropylamine, n-butylamine, isobutylamine, diisobutylamine, triethylamine, benzylamine, octylamine, dodecylamine, and stearylamine, an alkanol amine such as monoethanolamine and triethanolamine, a quaternary ammonium hydroxide such as guanidine hydroxide, tetramethylammonium hydroxide, and tetraethylammonium hydroxide, or a carbonic acid salt such as ammonium carbonate and guanidine carbonate.

### [Member]

The member of the present invention has a coating film formed from the coating composition on the surface of the substrate of the member. Specifically, by applying the coating composition onto the substrate and by subjecting the resultant coating film to a curing treatment to form a coating film, the member of the present invention can be obtained.
The substrate used for the member of the present invention is made of plastic, rubber, glass, metal, ceramic, paper, or the like.

The method for applying the coating composition onto the member may be any one of the publicly known methods such as a bar coating method, a reverse method, a gravure printing method, a micro gravure printing method, a dipping method, a spin coating method, and a spraying method.

The curing treatment can be performed by drying with hot air or by irradiating the member with an active energy ray. When the drying with hot air is used, the drying is preferably performed in hot air of 70 to 200°C. As the active energy ray, an ultraviolet ray, an infrared ray, a far-infrared ray, an electron beam, and the like can be used.

Although the thickness of the coating film formed on the member of the present invention is not particularly limited, it is preferably around 0.1 to 10 µm.

The surface resistance value of the coating film formed on the member of the present invention can be measured by a surface resistivity measuring apparatus (such as Hiresta UP and Loresta IP (both, manufactured by Mitsubishi Chemical Corporation)). The coating film has a surface resistance value in a range of 10⁵ to 10¹² Ω/□, so that the coating film exhibits extremely excellent antistatic performance.

Although the refractive index of the coating film varies depending on the mixing ratio between the hydrophobic-organic-solvent dispersion containing colloidal particles of anhydrous zinc antimonate and the binder component, and the binder component, the refractive index is substantially in a range of 1.55 to 1.80.

By further providing an antireflective film on the coating film of the member of the present invention, antireflective function can be imparted to the member.

The antireflective film can be obtained by providing, on the coating film of the member obtained by the present invention, a coating film having a refractive index that is lower than that of the coating film of the member. At this time, a difference in the refractive index between the low refractive index coating film and the high refractive index coating film is preferably 0.05 or more. When the difference in the refractive index between the low refractive index coating film and the high refractive index coating film is less than 0.05, a synergistic effect by these antireflective coating films cannot be obtained and rather, the antireflective effect may lower. Accordingly, the difference in the refractive index between the low refractive index coating film and the high refractive index coating film is more preferably a value of 0.1 to 0.5, further preferably a value of 0.15 to 0.5. Although the thickness of the low refractive index coating film is not particularly limited, for example, the thickness is preferably 50 nm to 300 nm. The thickness of the low refractive index coating film is preferably 50 nm to 300 nm. When the thickness of the low refractive index coating film becomes less than 50 nm, the adhesion of the low refractive index coating film with the high refractive index coating film as the undercoating may lower. On the other hand, when the thickness is more than 300 nm, a light interference may be caused and then, the antireflective effect may lower. When the low refractive index coating film is provided in plurality in order to obtain higher antireflective effect, the total thickness of the plurality of low refractive index coating films may be 50 to 300 nm.

A material making the low refractive index coating film is not particularly limited. However, examples of the material include: an organic silicon compound of General Formula (I) or (II) or a hydrolysis-condensation product thereof; a fluorinated resin such as a fluoroolefin-based polymer and a fluorine-containing acrylic polymer; and a low refractive index coating composition obtained by mixing fine particles having a low refractive index such as colloidal silica, magnesium fluoride, lithium fluoride, and sodium magnesium fluoride or fine particles having cavities with an organic or inorganic binder. An inorganic compound such as magnesium fluoride and silica can be film-formed also as a low refractive index coating film by a method such as vacuum deposition and a sputtering method.

Furthermore, as the antireflective film, a multilayer antireflective film produced by alternately laminating a high refractive index layer and a low refractive index layer can also be provided to impart antireflective function. At this time, the high refractive index layer is a layer of an oxide of at least one selected from the group consisting of titanium, tantalum, zirconium, niobium, or yttrium and the low refractive index layer is a layer of at least one selected from the group consisting of silica, alumina, magnesium fluoride, lithium fluoride, and sodium magnesium fluoride. These high refractive index layer and low refractive index layer can be formed by a dry plating method such as vacuum deposition, a sputtering method, and an ion plating method.

### Examples

### [Production Example 1]

1,300 g of antimony trioxide (manufactured by Yamanaka & co., ltd., Mikuni Smelting & Refining Factory) was dispersed in 5,587 g of water and next, to the dispersion, 953.7 g of 35% hydrogen peroxide was added, followed by subjecting the resultant reaction mixture to the reaction for 2 hours while heating the reaction mixture to 90 to 100°C to obtain an antimony pentaoxide sol. The obtained sol had a specific gravity of 1.198, pH of 1.80, a viscosity of 19.5 mPa·s, a Sb₂O₅ concentration of 18.4% by mass, a primary particle diameter measured by observation under a transmission electron microscope of 20 to 30 nm, and a specific surface area measured by a BET method of 55.0 m²/g.
To the obtained antimony pentaoxide sol, 276 g of basic zinc carbonate (manufactured by Sakai Chemical Industry Co., Ltd., 3ZnCO₃·4Zn(OH)₂, containing 70% by mass in terms of ZnO) was added at room temperature while stirring the sol and the resultant reaction mixture was mixed and was stirred further for 5 hours to obtain a slurry. The slurry was dried by a spray dryer to obtain a yellow white powder. The obtained powder was baked using a fluidized baking furnace at 550°C for 5 hours to obtain a blue green powder. As a result of the X-ray diffraction measurement of the powder, the peak of the powder coincided to the peak of anhydrous zinc antimonate (ZnSb₂O₆). A product produced by press-molding the powder under a pressure of 100 kg/cm² exhibited conductivity of 80 Ωcm as a specific resistance value.
This powder was ground by a pin disc mill and 84 kg of the ground powder and 320 kg of water were charged into a wet grinding apparatus having a capacity of 20 L (manufactured by Ashizawa Finetech Ltd., grinder Model LMK-20). The resultant mixture was wet-ground by glass beads (0.5 mmφ) to obtain an aqueous sol. The aqueous sol had pH of 6.86.
The aqueous sol was passed through a column filled with 50 L of a cation exchange resin (Amberlite (registered trade mark) IR-120 B; manufactured by Organo Corporation) at a rate SV=12 to subject the sol to cation exchange. Next, the aqueous sol was passed through a column filled with 50 L of an anion exchange resin (Amberlite IR-410 J; manufactured by Organo Corporation) at a passing rate SV=12 to subject the sol to anion exchange.
The thus obtained acidic aqueous sol of colloidal particles of anhydrous zinc antimonate had pH of 3.2, an electric conductivity of 164 µS/cm, and a ZnSb₂O₆ concentration of 17.6% by mass. A dried product of the sol had a specific surface area measured by a BET method of 47 m²/g and a converted primary particle diameter calculated from the specific surface area of 20 nm.

### [Example 1]

To 682 g of the acidic aqueous sol of colloidal particles of anhydrous zinc antimonate obtained in Production Example 1, 0.63 g of di-n-butylamine was added and the resultant mixture was stirred for 1 hour. The obtained aqueous sol had pH of 9.4 and a light intensity-average particle diameter measured by a dynamic light scattering method particle size distribution measuring apparatus (Zetasizer Nano ZS; manufactured by Malvern Instruments Ltd.) of 101 nm.
While adding methanol to the aqueous sol using a rotary evaporator, the water medium of the aqueous sol was replaced with a methanol medium to obtain 300 g of a methanol dispersion of colloidal particles of anhydrous zinc antimonate. The obtained methanol dispersion had a solid content concentration of 40.5% by mass, had pH (hereinafter, expressed as "pH (1+1)") of a diluted liquid prepared by mixing the methanol dispersion with water in a mass ratio of methanol dispersion : water = 1 : 1 that was measured by a pH meter at one hour after the dilution of 9.3, and had a light intensity-average particle diameter of 96 nm.
To the obtained methanol dispersion, 3.6 g of a surfactant Disperbyk (registered trade name)-111 (manufactured by BYK Japan KK) having a phosphoric acid group was added and the methanol dispersion was stirred for one hour. Then, while adding methyl ethyl ketone to the methanol dispersion using a rotary evaporator, the methanol medium was replaced with a methyl ethyl ketone medium to obtain 300 g of a methyl ethyl ketone dispersion of colloidal particles of anhydrous zinc antimonate. The obtained methyl ethyl ketone dispersion had a solid content concentration of 40.5% by mass, had pH (hereinafter, expressed as "pH (1+1+1)") of a diluted liquid prepared by mixing the methyl ethyl ketone dispersion, methanol, and water in a mass ratio of methyl ethyl ketone dispersion : methanol : water =1:1:1 that was measured by a pH meter at one hour after the dilution of 4.6, had a light intensity-average particle diameter of 90 nm, and had a viscosity of 1.1 mPa·s. The obtained methyl ethyl ketone dispersion was preserved in an enclosed environment at room temperature for 24 hours or at 50°C for 24 hours and as a result thereof, both of the light intensity-average particle diameter and the viscosity maintained the physical property values before the preservation, so that the dispersion was excellent in preservation stability.

### [Example 2]

To 682 g of the acidic aqueous sol of colloidal particles of anhydrous zinc antimonate obtained in Production Example 1, 0.82 g of tri-n-butylamine was added and the resultant mixture was stirred for 1 hour. The obtained aqueous sol had pH of 9.6 and a light intensity-average particle diameter of 101 nm.
While adding methanol to the aqueous sol using a rotary evaporator, the water medium of the aqueous sol was replaced with a methanol medium to obtain 300 g of a methanol dispersion of anhydrous zinc antimonate. The obtained methanol dispersion had a solid content concentration of 40.5% by mass, pH (1+1) of 9.5, and a light intensity-average particle diameter of 96 nm.
To the obtained methanol dispersion, 3.6 g of a surfactant Disperbyk-111 (manufactured by BYK Japan KK) having a phosphoric acid group was added and the methanol dispersion was stirred for one hour. Then, while adding methyl ethyl ketone to the methanol dispersion using a rotary evaporator, the methanol medium was replaced with a methyl ethyl ketone medium to obtain 300 g of a methyl ethyl ketone dispersion of colloidal particles of anhydrous zinc antimonate. The obtained methyl ethyl ketone dispersion had a solid content concentration of 40.5% by mass, pH (1+1+1) of 4.9, a light intensity-average particle diameter of 91 nm, and a viscosity of 1.0 mPa·s. The obtained methyl ethyl ketone dispersion was preserved in an enclosed environment at room temperature for 24 hours or at 50°C for 24 hours and as a result thereof, both of the light intensity-average particle diameter and the viscosity maintained the physical property values before the preservation, so that the dispersion was excellent in preservation stability.

### [Example 3]

To 682 g of the acidic aqueous sol of colloidal particles of anhydrous zinc antimonate obtained in Production Example 1, 0.82 g of tri-n-butylamine was added and the resultant mixture was stirred for 1 hour. The obtained aqueous sol had pH of 9.6 and a light intensity-average particle diameter of 101 nm.
While adding methanol to the aqueous sol using a rotary evaporator, the water medium of the aqueous sol was replaced with a methanol medium to obtain 300 g of a methanol dispersion of anhydrous zinc antimonate. The obtained methanol dispersion had a solid content concentration of 40.5% by mass, pH (1+1) of 9.5, and a light intensity-average particle diameter of 96 nm.
To the obtained methanol dispersion, 3.6 g of a surfactant Disperbyk-111 (manufactured by BYK Japan KK) having a phosphoric acid group was added and the methanol dispersion was stirred for one hour. Then, while adding ethyl acetate to the methanol dispersion using a rotary evaporator, the methanol medium was replaced with an ethyl acetate medium to obtain 300 g of an ethyl acetate dispersion of colloidal particles of anhydrous zinc antimonate. The obtained ethyl acetate dispersion had a solid content concentration of 40.5% by mass, pH (1+1+1) of 5.1, a light intensity-average particle diameter of 100 nm, and a viscosity of 1.5 mPa·s. The obtained ethyl acetate dispersion was preserved in an enclosed environment at room temperature for 24 hours or at 50°C for 24 hours and as a result thereof, both of the light intensity-average particle diameter and the viscosity maintained the physical property values before the preservation, so that the dispersion was excellent in preservation stability.

### [Example 4]

To 682 g of the acidic aqueous sol of colloidal particles of anhydrous zinc antimonate obtained in Production Example 1, 0.82 g of tri-n-butylamine was added and the resultant mixture was stirred for 1 hour. The obtained aqueous sol had pH of 9.6 and a light intensity-average particle diameter of 101 nm.
While adding methanol to the aqueous sol using a rotary evaporator, the water medium of the aqueous sol was replaced with a methanol medium to obtain 300 g of a methanol dispersion of anhydrous zinc antimonate. The obtained methanol dispersion had a solid content concentration of 40.5% by mass, pH (1+1) of 9.5, and a light intensity-average particle diameter of 96 nm.
To the obtained methanol dispersion, 3.6 g of a surfactant Disperbyk-111 (manufactured by BYK Japan KK) having a phosphoric acid group was added and the methanol dispersion was stirred for one hour. Then, while adding propylene glycol monomethyl ether to the methanol dispersion using a rotary evaporator, the methanol medium was replaced with a propylene glycol monomethyl ether medium to obtain 300 g of a propylene glycol monomethyl ether dispersion of colloidal particles of anhydrous zinc antimonate. The obtained propylene glycol monomethyl ether dispersion had a solid content concentration of 40.5% by mass, pH (1+1+1) of 4.9, a light intensity-average particle diameter of 110 nm, and a viscosity of 3.3 mPa·s. The obtained propylene glycol monomethyl ether dispersion was preserved in an enclosed environment at room temperature for 24 hours or at 50°C for 24 hours and as a result thereof, both of the light intensity-average particle diameter and the viscosity maintained the physical property values before the preservation, so that the dispersion was excellent in preservation stability.

### [Example 5]

To 5 g of the methyl ethyl ketone dispersion of colloidal particles of anhydrous zinc antimonate obtained in Example 1, an ultraviolet ray-curable resin composition prepared by mixing 0.9 g of dipentaerythritol hexaacrylate (KAYARAD (registered trade mark) DPHA; manufactured by Nippon Kayaku Co., Ltd.), 0.1 g of a photoinitiator Irgacure (registered trade mark) 184 (manufactured by Ciba-Geigy A.G. (present: BASF Japan Ltd.)), and 2.1 g of methyl ethyl ketone was blended to obtain a resin composition containing colloidal particles of anhydrous zinc antimonate. The obtained resin composition exhibited advantageous dispersion state.
The obtained resin composition was applied onto the top face of a PET film (thickness: 125 µm) using a No. 6 wire bar and was irradiated with an ultraviolet ray by an ultraviolet ray irradiator to obtain a PET film having a conductive coating film.
The obtained PET film with a conductive coating film was subjected to haze measurement using a spectral haze meter TC-H3DPK-MKII (manufactured by Tokyo Denshoku Co., Ltd.) and as a result thereof, the total light transmittance (Tt) was 96.5% and the haze value was 0.1. The surface resistance value of this film measured by a surface resistivity measuring apparatus Hiresta UP (manufactured by Mitsubishi Chemical Corporation) was 7×10⁷ Ω/□.

### [Example 6]

To 5 g of the methyl ethyl ketone dispersion of colloidal particles of anhydrous zinc antimonate obtained in Example 2, an ultraviolet ray-curable resin composition prepared by mixing 0.9 g of dipentaerythritol hexaacrylate (KAYARAD (registered trade mark) DPHA; manufactured by Nippon Kayaku Co., Ltd.), 0.1 g of a photoinitiator Irgacure (registered trade mark) 184 (manufactured by Ciba-Geigy A.G. (present: BASF Japan Ltd.)), and 2.1 g of methyl ethyl ketone was blended to obtain a resin composition containing colloidal particles of anhydrous zinc antimonate. The obtained resin composition exhibited advantageous dispersion state.
The obtained resin composition was applied onto the top face of a PET film (thickness: 125 µm) using a No. 6 wire bar and was irradiated with an ultraviolet ray by an ultraviolet ray irradiator to obtain a PET film having a conductive coating film.
The obtained PET film with a conductive coating film was subjected to haze measurement using a spectral haze meter TC-H3DPK-MKII (manufactured by Tokyo Denshoku Co., Ltd.) and as a result thereof, the total light transmittance (Tt) was 96.6% and the haze value was 0.1. The surface resistance value of this film measured by a surface resistivity measuring apparatus Hiresta UP (manufactured by Mitsubishi Chemical Corporation) was 8×10⁷ Ω/□.

### [Example 7]

To 5 g of the ethyl acetate dispersion of colloidal particles of anhydrous zinc antimonate obtained in Example 3, an ultraviolet ray-curable resin composition prepared by mixing 0.9 g of dipentaerythritol hexaacrylate (KAYAIZAD (registered trade mark) DPHA; manufactured by Nippon Kayaku Co., Ltd.), 0.1 g of a photoinitiator Irgacure (registered trade mark) 184 (manufactured by Ciba-Geigy A.G. (present: BASF Japan Ltd.)), and 2.1 g of methyl ethyl ketone was blended to obtain a resin composition containing colloidal particles of anhydrous zinc antimonate. The obtained resin composition exhibited advantageous dispersion state.
The obtained resin composition was applied onto the top face of a PET film (thickness: 125 µm) using a No. 6 wire bar and was irradiated with an ultraviolet ray by an ultraviolet ray irradiator to obtain a PET film having a conductive coating film.
The obtained PET film with a conductive coating film was subjected to haze measurement using a spectral haze meter TC-H3DPK-MKII (manufactured by Tokyo Denshoku Co., Ltd.) and as a result thereof, the total light transmittance (Tt) was 97.0% and the haze value was 0.2. The surface resistance value of this film measured by a surface resistivity measuring apparatus Hiresta UP (manufactured by Mitsubishi Chemical Corporation) was 8×10⁷ Ω/□.

### [Example 8]

To 5 g of the propylene glycol monomethyl ether dispersion of colloidal particles of anhydrous zinc antimonate obtained in Example 4, an ultraviolet ray-curable resin composition prepared by mixing 0.9 g of dipentaerythritol hexaacrylate (KAYARAD (registered trade mark) DPHA; manufactured by Nippon Kayaku Co., Ltd.), 0.1 g of a photoinitiator Irgacure (registered trade mark) 184 (manufactured by Ciba-Geigy A.G. (present: BASF Japan Ltd.)), and 2.1 g of methyl ethyl ketone was blended to obtain a resin composition containing colloidal particles of anhydrous zinc antimonate. The obtained resin composition exhibited advantageous dispersion state.
The obtained resin composition was applied onto the top face of a PET film (thickness: 125 µm) using a No. 6 wire bar and was irradiated with an ultraviolet ray by an ultraviolet ray irradiator to obtain a PET film having a conductive coating film.
The obtained PET film with a conductive coating film was subjected to haze measurement using a spectral haze meter TC-H3DPK-MKII (manufactured by Tokyo Denshoku Co., Ltd.) and as a result thereof, the total light transmittance (Tt) was 95.0% and the haze value was 0.3. The surface resistance value of this film measured by a surface resistivity measuring apparatus Hiresta UP (manufactured by Mitsubishi Chemical Corporation) was 6×10⁷ Ω/□.

### [Comparative Example 1]

While adding methanol to 682 g of the acidic aqueous sol of colloidal particles of anhydrous zinc antimonate obtained in Production Example 1 using a rotary evaporator, the water medium of the aqueous sol was attempted to be replaced with a methanol medium. However, during the replacement, the aqueous sol was gelled, so that a stable sol could not be obtained.

### [Comparative Example 2]

To 682 g of the acidic aqueous sol of colloidal particles of anhydrous zinc antimonate obtained in Production Example 1, 0.82 g of tri-n-butylamine was added and the resultant mixture was stirred for 1 hour. The obtained aqueous sol had pH of 9.6 and a light intensity-average particle diameter of 101 nm.
While adding methanol to the aqueous sol using a rotary evaporator, the water medium of the aqueous sol was replaced with a methanol medium to obtain 300 g of a methanol dispersion of colloidal particles of anhydrous zinc antimonate. The obtained methanol dispersion had a solid content concentration of 40.5% by mass, pH (1+1) of 9.5, and a light intensity-average particle diameter of 96 nm.
While adding MEK to the obtained methanol dispersion using a rotary evaporator, the methanol medium of the methanol dispersion was attempted to be replaced with a methyl ethyl ketone medium. However, during the replacement, the aqueous sol was gelled, so that a stable sol could not be obtained.

### [Comparative Example 3]

To 682 g of the acidic aqueous sol of colloidal particles of anhydrous zinc antimonate obtained in Production Example 1, 0.34 g of tri-n-butylamine was added and the resultant mixture was stirred for 1 hour. The obtained aqueous sol had pH of 5.1 and a light intensity-average particle diameter of 101 nm.
While adding methanol to the aqueous sol using a rotary evaporator, the water medium of the aqueous sol was replaced with a methanol medium to obtain 300 g of a methanol dispersion of colloidal particles of anhydrous zinc antimonate. The obtained methanol dispersion had a solid content concentration of 40.5% by mass, pH (1+1) of 5.8, and a light intensity-average particle diameter of 96 nm.
To the obtained methanol dispersion, 3.6 g of a surfactant Disperbyk-111 (manufactured by BYK Japan KK) having a phosphoric acid group was added and the methanol dispersion was stirred for one hour. Then, while adding methyl ethyl ketone to the methanol dispersion using a rotary evaporator, the methanol medium was replaced with a methyl ethyl ketone medium to obtain 300 g of a methyl ethyl ketone dispersion of colloidal particles of anhydrous zinc antimonate. The obtained methyl ethyl ketone dispersion had a solid content concentration of 40.5% by mass, pH (1+1+1) of 3.5, a light intensity-average particle diameter of 93 nm, and a viscosity of 1.2 mPa·s. The obtained methyl ethyl ketone dispersion was preserved in an enclosed environment at room temperature for 24 hours or at 50°C for 24 hours and as a result thereof, the methyl ethyl ketone dispersion was aggregated and gelled, so that the methyl ethyl ketone dispersion was poor in preservation stability.

### INDUSTRIAL APPLICABILITY

By applying the coating composition obtained by mixing the hydrophobic-organic-solvent dispersion containing colloidal particles of anhydrous zinc antimonate of the present invention and a binder onto a substrate, a conductive coating film having high transparency can be formed. When the substrate is a transparent substrate, a member having a conductive or antistatic coating film can be produced without impairing the transparency of the substrate.

## Claims

1. A hydrophobic-organic-solvent dispersion comprising:
colloidal particles of anhydrous zinc antimonate having a primary particle diameter of 5 to 500 nm, which are surface-modified with an alkylamine and a surfactant having an acid group.

2. The hydrophobic-organic-solvent dispersion according to claim 1, wherein the alkylamine is a C₄₋₁₈ alkylamine.

3. The hydrophobic-organic-solvent dispersion according to claim 1, wherein the acid group in the surfactant having the acid group is a carboxylic acid group, a sulfonic acid group, or a phosphoric acid group.

4. The hydrophobic-organic-solvent dispersion according to any one of claims 1 to 3, wherein the hydrophobic organic solvent is at least one selected from the group consisting of methylcellosolve, ethylcellosolve, methyl ethyl ketone, methyl isobutyl ketone, isobutyl acetate, isopropyl acetate, isopentyl acetate, ethyl acetate, butyl acetate, propyl acetate, pentyl acetate, propylene glycol monomethyl ether, propylene glycol monomethyl ether acetate, xylene, toluene, and benzene.

5. A coating composition comprising:
the hydrophobic-organic-solvent dispersion according to any one of claims 1 to 4; and
a binder component.

6. The coating composition according to claim 5, wherein the binder component is at least one selected from the group consisting of an acrylic resin, a polyester resin, a urethane resin, an epoxy resin, a polyvinyl alcohol resin, a melamine resin, gelatin and gelatin derivatives, cellulose and cellulose derivatives, a polyimide resin, a phenolic resin, an organic silicon compound, a urea resin, a diallyl phthalate resin, and a butyral resin.

7. A member comprising:
a coating film formed from the coating composition according to claim 5 or 6 on a surface of a substrate.

8. The member according to claim 7, wherein the substrate is made of plastic, rubber, glass, metal, ceramic, or paper.

9. The member according to claim 7 or 8, wherein the coating film has a surface resistance value of 10¹² Ω/□ or less.

10. A member with an antireflective film comprising:
an antireflective film on the coating film of the member according to any one of claims 7 to 9.
